**Europäisches Patentamt**

**European Patent Office**

**Office européen des brevets**

(11) Veröffentlichungsnummer: **0 136 674**

**B1**

(12) **EUROPÄISCHE PATENTSCHRIFT**

(45) Veröffentlichungstag der Patentschrift:
25.11.87

(51) Int. Cl.⁴: **B 60 H 1/00**

(21) Anmeldenummer: **84111632.0**

(22) Anmeldetag: **28.09.84**

(54) Heiz- und/oder Klimaanlage für Kraftfahrzeuge.

(30) Priorität: **01.10.83 DE 3335769**

(43) Veröffentlichungstag der Anmeldung:
**10.04.85 Patentblatt 85/15**

(45) Bekanntmachung des Hinweises auf die Patenterteilung:
**25.11.87 Patentblatt 87/48**

(84) Benannte Vertragsstaaten:
**DE FR GB IT SE**

(56) Entgegenhaltungen:
**EP-A-0 102 611**
**DE-A-3 048 195**
**DE-C-2 504 475**

(73) Patentinhaber: **BAYERISCHE MOTOREN WERKE Aktiengesellschaft, Postfach 40 02 40 Petuelring 130 - AJ- 36, D-8000 München 40 (DE)**

(72) Erfinder: **Schicktanz, Norbert, Ed- Spranger Strasse 34, D-8000 München 45 (DE)**
Erfinder: **Busch, Lothar, Frauwiesenweg 27, D-8031 Gilching (DE)**
Erfinder: **Zelger, Werner, Riesenfeldstrasse 55, D-8000 München 40 (DE)**

(74) Vertreter: **Bücken, Helmut, Bayerische Motoren Werke Aktiengesellschaft Postfach 40 02 40 Petuelring 130 - AJ- 30, D-8000 München 40 (DE)**

## Beschreibung

Die Erfindung bezieht sich auf eine Heiz- und/oder Klimaanlage für Kraftfahrzeuge einer Bauart mit den Merkmalen des Oberbegriffes des Patentanspruches 1.

Eine bekannte Anlage dieser Bauart nach DE-C- 25 04 475 weist zur gleichmäßigen Temperatureinstellung durch Mischen von Kalt- und Warmluft eine Wechselklappe auf, an deren freier Endkante eine Schwenkklappe als Kaltluft- Strömungswiderstand gelagert ist, der dem Warmluft-Strömungswiderstand des Heizwärmetauschers entsprechen soll. Für die Steuerung der Schwenkklappe sind Gestänge und/oder Führungsbahnen mit hohem Bauaufwand erforderlich. Ferner ist die Drosselwirkung der Schwenkklappe nicht gleichbleibend über den gesamten Verstellweg der Wechselklappe erreichbar. Schließlich sind Wechsel- und Schwenkklappe an der Verzweigungsstelle eines Frischluftkanals zu je einem Kalt- und Warmluftkanal angeordnet und erstrecken sich im wesentlichen von ihren Lagerachsen ausgehend entgegengesetzt zur Luftströmungsrichtung, sodaß die Schwenkklappe als Abweisfläche zum Warmluftkanal hin wirkt. Für die Freigängigkeit beider Klappen besteht ein hoher Raumbedarf.

Aufgabe der Erfindung ist es, bei einer bauartgemäßen Heiz- und/oder Klimaanlage die Funktion der Temperatureinstellung durch Mischen von Kalt- und Warmluft, den Bauaufwand und den Raumbedarf der Wechsel- und Schwenkklappen zu verbessern. Diese Aufgabe löst die Erfindung mit den kennzeichnenden Merkmalen des Patentanspruches 1. Die Schwenkklappe bewirkt dabei über den gesamten Verstellweg der Wechselklappe und damit Mischbereich von Kalt- und Warmluft gleichbleibend den erforderlichen Strömungswiderstand im Kaltluftkanal ohne einen zusätzlichen, über den Querschnitt des Kaltluftkanals hinausgehenden Raumbedarf. Die Steuerung der Schwenkklappe in Abhängigkeit von der Stellung der Wechselklappe ist durch die festliegende Lagerachse der Schwenkklappe mit geringem Bauaufwand und Raumbedarf mit üblichen Mitteln möglich. Dies trifft insbesondere bei Anordnung der Lagerachse gemäß Anspruch 2 zu. Gemäß Anspruch 3 ist eine elektromotorische Zwangssteuerung als Antriebsverbindung vorteilhaft, weil sich dadurch hohe Reibungswiderstände in Gestängen und Kurvenbahnen vermeiden lassen. Die Ausbildung der Schwenkklappe als Strömungswiderstand ist gemäß Anspruch 4 mittels Durchbrechungen bzw. durch Ausbildung als Sieb oder Lochplatte vorteilhaft lösbar.

In der Zeichnung ist ein Ausführungsbeispiel der Erfindung dargestellt. Es zeigen:

Fig. 1 eine Klimaanlage für Kraftfahrzeuge in Warm-Belüftungs-Einstellung im schematischen Längsschnitt und

Fig. 2 die Klimaanlage nach Fig. 1 in Kalt- Belüftungs-Einstellung.

Eine Klimaanlage für den Fahrgastraum von Personenkraftwagen enthält einen Heizwärmetauscher 1 und einen Kühl- Verdampfer 1', denen über ein Gebläse 2 Frischluft bzw. Umluft zugeführt wird. Die aus dem Heizwärmetauscher 1 austretende Warmluft strömt über Öffnungen 3 und 4 zu nicht dargestellten Fußraumöffnungen bzw. Entfrosterdüsen.

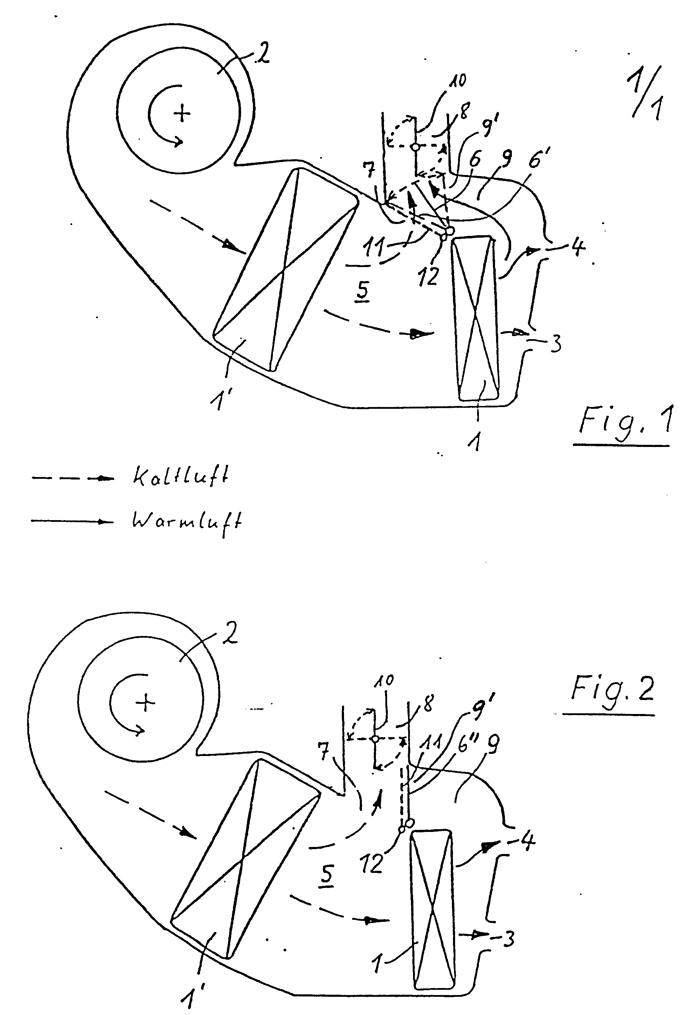

Parallel zum Heizwärmetauscher 1 zweigt vom Kaltluftkanal 5 ein Bypass ab, der durch eine Wechselklappe 6 und eine Öffnung 7 gesteuert bzw. gebildet ist. in einer in Fig. 2 dargestellten Endlage 6'' gibt die Wechselklappe 6 die Öffnung 7 zu einem Belüftungskanal 8 frei, an den nicht dargestellte Belüftungsöffnungen zum Kopfraum im Fahrgastraum angeschlossen sind. In dieser Endlage verschließt die Wechselklappe 6 eine Eintrittsöffnung 9' aus einem Warmluftkanal 9, sodaß sich eine Kaltbelüftung des Kopfraumes ergibt. In der anderen in Fig. 1 dargestellten Endlage 6' verschließt die Wechselklappe 6 die Öffnung 7 aus dem Kaltluftkanal 5 und gibt die Eintrittsöffnung 9' vom Warmluftkanal 9 frei, wodurch sich eine Warmbelüftung des Kopfraumes ergibt.

An beliebiger Stelle innerhalb des Belüftungskanals 8 ist eine Steuerklappe 10 angeordnet, die unabhängig von der Schwenkklappe 6 betätigbar ist und zwischen einer gestrichelt dargestellten Schließstellung und einer normal dargestellten Offenstellung verstellbar ist.

Mittels der Wechselklappe 6 und der Steuerklappe 10 kann einerseits eine Temperaturschichtung zwischen der durch den Belüftungskanal in den Kopfraum und der durch die Öffnungen 3 und 4 in den Fußraum bzw. durch die Entfrosterdüsen strömenden Luft sowie andererseits eine Mengensteuerung der durch den Belüftungskanal 8 in den Kopfraum gelangenden Luft vorgenommen werden.

Durch die unterschiedlichen Leitungsverläufe und Leitungsquerschnitte der in den Belüftungskanal 8 mündenden Öffnungen 7 und 9', des Warmluftkanals 9 und insbesondere durch den Strömungswiderstand des Heizwärmetauschers 1 im Warmluftkanal 9 ist eine gleichmäßige Verstell- bzw. Einstellbarkeit der Lufttemperatur im Belüftungskanal 8 allein mittels der Schwenkklappe 6 und unabhängig von der Einstellung der Steuerklappe 10 erschwert. Um dies zu vermeiden und eine weitgehend gleichmäßige Temperatur- Verstellbarkeit über den Verstellbereich der Wechselklappe 6 zu erreichen, ist im Bereich der Öffnung 7 der Wechselklappe 6 eine Schwenkklappe 11 als Widerstandskörper in Form einer Lochplatte - in Strömungsrichtung der Kaltluft gesehen - vorgeschaltet. Die Schwenkklappe 11 ist um ihre Lagerachse 12 von der in Fig. 1 dargestellten wirksamen Stellung in die in Fig. 2 dargestellte unwirksame Stellung verschwenkbar. Die Lagerachse 12 ist identisch mit oder zumindest in unmittelbarer Nähe der Lagerachse der Wechselklappe 6 angeordnet. Wechsel- und Schwenkklappe 6 bzw. 11 sind mittels einer Zwangsführung bzw. mittels eines gekoppelten elektromotorischen Antriebes der Wechselklappe 6 und der Schwenkklappe 11 derart gemeinsam verstellbar, daß dann, wenn die Wechselklappe 6 die in Fig. 2 dargestellte, die Öffnung 9' des Warmluftkanals 9 absperrende Endlage aufweist, die Schwenkklappe 11 wie die Wechselklappe 6 die Öffnung 7 aus dem Kaltluftkanal 5 vollständig öffnet.

Ausgehend von der Endlage 6' der Wechselklappe 6, in der diese die Eintrittsöffnung 9' für die Warmluft in den Belüftungskanal 8 vollständig freigibt, kann die Temperatur der Luft im Belüftungskanal 8 von ihrem Höchstwert durch Verschwenken der Wechselklappe 6 in Richtung zu ihrer anderen, in Fig. 2 dargestellten Endlage bis zur Temperatur der Luft im Kaltluftkanal 5 abgesenkt werden. Während des Verschwenkens der Wechselklappe 6 bleibt die Schwenkklappe 11 zunächst in der in Fig. 1 dargestellten wirksamen Lage. Durch seinen Strömungswiderstand, der zumindest annähernd gleich dem des Heizwärmetauschers 1 ist, wird eine Angleichung der Druckverhältnisse der beiden durch die Wechselklappe 6 komplementär veränderbaren Luftströme erreicht. Dadurch kann allein durch Verstellen der Wechselklappe 6 die Temperatur der in den Belüftungskanal 8 fließenden Luftmischung aus Kalt- und Warmluftkanal 5 bzw. 9 gleichmäßig und beliebig verstellt werden. Die gewählte Temperatur ist unabhängig von der Einstellung der die Luftmenge bestimmenden Steuerklappe 10 und von Änderungen dieser Einstellung. Erreicht die Wechselklappe 6 die in Fig. 2 dargestellte Endlage 6'', so bewirkt die Zwangssteuerung der Schwenkklappe 11, daß diese in die ebenfalls in Fig. 2 dargestellte unwirksame Endlage geschwenkt wird und damit die Öffnung 7 vollständig freigibt. Dadurch kann die Frischluft bzw. die durch den Kühl-Verdampfer 1' abgekühlte Luft ungehindert in den Belüftungskanal 8 und damit in den Kopfraum des Fahrgastraumes gelangen, sodaß eine hochwirksame Belüftungsfunktion bei hohen Umgebungstemperaturen gewährleistet ist.

## Patentansprüche

1. Heiz- und/oder Klimaanlage für Kraftfahrzeuge, mit je einem Kaltluft- und Warmluftkanal (5 bzw. 9),
die in einen Belüftungskanal (8) münden und deren Kalt- bzw. Warmluft-Anteile mittels mindestens einer Wechselklappe (6) steuerbar sind,
wobei in Abhängigkeit von der Stellung der Wechselklappe (6) eine Schwenkklappe (11) in den Kaltluftstrom hineinschwenkbar ist,

die in ihrer Drosselstellung dem Strömungswiderstand eines Heizwärmetauschers (1) im Warmluftkanal (9) entsprechend wirksam ist und
die bei mindestens teilweise geöffnetem Warmluftkanal (9) den Kaltluftstrom drosselt und bei mindestens nahezu geschlossenem Warmluftkanal (9) den Kaltluftstrom vollständig freigibt,
dadurch gekennzeichnet,
daß die Wechselklappe (6) an der Mündung von Kalt- und Warmluftkanal (5 bzw. 9) in den Belüftungskanal (8) und
die Schwenkklappe (11) im Kaltluftkanal (5) - in Strömungsrichtung der Kaltluft gesehen - vor der Wechselklappe (6) angeordnet sind,
wobei die Schwenkklappe (11) in Abhängigkeit von der den Kaltluftkanal (5) abschließenden Endlage (6') bis zumindest annähernd der den Warmluftkanal (9) abschließenden Endlage (6'') der Wechselklappe (6) eine den Kaltluftkanal (5) drosselnde Endlage sowie
in Abhängigkeit von der den Warmluftkanal (9) abschließenden Endlage (6'') der Wechselklappe (6) eine den Kaltluftkanal (5) freigebende Endlage aufweist.

2. Vorrichtung nach Anspruch 1, dadurch gekennzeichnet,
daß die Schwenkklappe (11) eine der Lagerachse der Wechselklappe (6) eng benachbarte bis übereinstimmende Lagerachse (12) aufweist.

3. Vorrichtung nach Anspruch 1, dadurch gekennzeichnet,
daß Schwenkklappe (11) und Wechselklappe (6) mittels einer elektromotorischen Zwangssteuerung antriebs-verbunden sind.

4. Vorrichtung nach Anspruch 1, dadurch gekennzeichnet,
daß die Schwenkklappe (11) mit Durchbrechungen bzw. als Sieb oder Lochplatte ausgebildet ist.

## Claims

1. A heating and/or air-conditioning installation for motor vehicles,
having a cold air duct and a hot air duct (5 and 9) which open into a ventilation duct (8) with the proportions of cold and hot air being controllable by means of at least one change-over flap (6),
while, in dependence upon the position of the change-over flap (6), a pivot flap (11) is pivotable into the cold air stream,
which pivot flap, in its throttling position, is effective in correspondence with the flow resistance of a heating heat exchanger (1) in the hot air duct (9), and
throttles the cold air current when the hot air duct (9) is at least partially opened and completely frees the cold air current when the hot air duct (9) is at least nearly closed,
characterised in that

the change-over flap (6) is arranged at the entry of the cold and hot air ducts (5 and 9) into the ventilation duct (8) and

the pivot flap (11) is arranged in the cold air duct (5) in advance of the change-over flap (6) - seen in the direction of flow of the cold air,

with the pivot flap (11) having an end position where it throttles the cold air duct (5) in dependence upon the end position (6') of the change-over flap (6) for closing the cold air duct (5) to at least approximately the end position (6'') of the change-over flap (6) for closing the hot air duct (9)

as well as an end position where it clears the cold air duct (5) in dependence upon the end position (6'') of the change-over flap (6) for closing the hot air duct (9).

2. Apparatus according to Claim 1, characterised in that

the pivot flap (11) is provided with a bearing axis closely adjacent to or coinciding with the bearing axis of the change-over flap (6).

3. Apparatus according to Claim 1, characterised in that

the pivot flap (11) and the change-over flap (6) are drivingly-connected by means of an electro-motorised positive control system.

4. Apparatus according to Claim 1, characterised in that

the pivot flap (11) is formed with openings or as a sieve or perforated plate.

**Revendications**

1. Installation de chauffage et/ou de conditionnement d'air pour véhicules automobiles, comportant un canal d'air froid et un canal d'air chaud (5 et 9 respectivement), qui débouchent dans un canal de ventilation (8) et dont les proportions d'action par air froid ou air chaud peuvent être commandées au moyen d'au moins un clapet d'alternance (6), un clapet pivotant (11) pouvant pivoter dans le courant d'air froid en fonction de la position du clapet d'alternance (6), clapet pivotant qui, dans sa position d'étranglement, est agissant en correspondance avec la résistance au courant d'un échangeur thermique chauffant (1) disposé dans le canal d'air chaud (9), et qui, lorsque le canal d'air chaud (9) est ouvert au moins partiellement, étrangle le courant d'air froid et, lorsque le canal d'air chaud (9) est fermé au moins à peu près, libère entièrement le courant d'air froid, installation caractérisée en ce que: la clapet d'alternance (6) est disposé à l'endroit où les canaux d'air froid et d'air chaud (5 et 9 respectivement) débouchent dans le canal de ventilation (8), et le clapet pivotant (11) est disposé dans le canal d'air froid (5) en avant - vu dans la direction du courant d'air froid - du clapet d'alternance (6), le clapet pivotant (11) se plaçant: en fonction de la position terminale (6') du clapet d'alternance (6) qui obture le canal d'air froid (5) jusqu'à au moins approximativement, sa position terminale (6'') qui obture le canal d'air chaud (9), dans une position terminale étranglant le canal d'air froid (5), ainsi qu'en fonction de la position terminale (6'') du clapet d'alternance (6) qui obture le canal d'air chaud (9), dans une position terminale libérant le canal d'air froid (5),

2. Installation selon la revendication 1, caractérisée en ce que le clapet pivotant (11) comporte un axe de support (12) étroitement voisin de - allant jusqu'à coïncider avec - l'axe de support du clapet d'alternance (6).

3. Installation selon la revendication 1, caractérisée en ce que le clapet pivotant (11) et le clapet d'alternance (6) sont liés en entraînement au moyen d'une commande forcée par moteur électrique.

4. Installation selon la revendication 1, caractérisée en ce que le clapet pivotant (11) est constitué avec des percements donc sous la forme de tamis ou de plaque à trous.

Fig. 1

$1/1$

- - - →  Kaltluft

———→  Warmluft

Fig. 2